Europäisches Patentamt

European Patent Office

Office européen des brevets

(19)

(11) Publication number: **0 428 149 A2**

# EUROPEAN PATENT APPLICATION

(12)

(21) Application number: **90121743.0**

(22) Date of filing: **13.11.90**

(51) Int. Cl.⁵: **G06F 12/08**

(30) Priority: **13.11.89 US 434931**

(43) Date of publication of application:
**22.05.91 Bulletin 91/21**

(84) Designated Contracting States:
**DE FR GB IT NL SE**

(71) Applicant: **MATRA DESIGN SEMICONDUCTOR, INC.**
**2895 Northwestern Parkway**
**Santa Clara, California 95051(US)**

(72) Inventor: **Kahlich, Arthur**

**1225 Woodward Avenue**
**South Bend, Indiana 46616-1525(US)**

(74) Representative: **Schmidt-Evers, Jürgen, Dipl.-Ing. et al**
**Patentanwälte Dipl.-Ing. H. Mitscherlich**
**Dipl.-Ing. K. Gunschmann Dipl.-Ing.**
**Dr.rer.nat. W. Körber Dipl.-Ing. J.**
**Schmidt-Evers Dipl.-Ing. W. Melzer**
**Dipl.-Phys.Dr.rer.na**
**t. R. Schulz, Postfach 260132, D-8000**
**München 26(DE)**

(54) **Cache controller.**

(57) A cache controller (44) for cache memory (42) in accordance with this invention monitors main memory (60) accesses by a CPU (48) and determines whether read and write hits to occur. Upon a read hit, the cache controller (44) causes the CPU (48) to read from cache memory (42) and not from main memory (60). Upon a write hit, the cache controller (44) causes data from the CPU (48) to be written to cache memory (42) and not main memory (60). The cache controller (44) also snoops main memory (60) accesses by remote bus master devices to determine whether remote bus master snoop read and write hits occur. Upon a remote bus master snoop read hit, the cache controller (44) causes data in a cache memory location corresponding to an addressed main memory location to be written to the remote bus master device and not written from the addressed main memory location. Upon a remote bus master snoop write hit, the cache controller (44) causes data written from the remote bus master device to be written into a cache memory location corresponding to the addressed main memory location.

FIG. 5

## CACHE CONTROLLER

### BACKGROUND OF THE INVENTION

This invention relates to cache memories, and more particularly to a cache memory controller in a microcomputer system which controls the cache memory to operate in a copy-back mode.

Cache memories are small, high speed auxiliary memories used in computer systems. Using known algorithms, the contents of selected locations in the main memory of the computer system are periodically copied into the cache memory. The central processing unit reads and writes to and from the cache memory if possible. Since the cache memory is a higher speed memory than the main memory, this reduces cycle time. Further, when a remote bus master device, such as a direct memory access (DMA) device accesses main memory, the processor can continue to run using cache memory while the remote bus master's main memory access is serviced. This further facilitates throughput and enhances performance of the computer system.

Until recently, cache memories were typically used only in mainframe computers and mini-computers. The microprocessors used in personal computers or microcomputers were too slow to benefit from cache memory. With the advent of thirty-two bit microprocessors, such as the Intel 80386, the clock speed of microprocessors has increased sufficiently so that cache memory can now provide a significant throughput enhancement in microcomputer systems. Consequently, cache memories are being used in microcomputer systems having high speed microprocessors, such as the Intel 80386. Further, an Intel 80286 compatible chip having a 25 MHz clock has recently been developed. This microprocessor also has a clock speed sufficiently fast that using cache memory is advantageous.

A cache memory typically consists of a very high speed random access memory (RAM). It is controlled by a cache memory controller which determines what is written to and read from the cache memory. As discussed previously, cache memory is accessed in lieu of main memory, if possible, to decrease overall memory access time and thus increase throughput.

When the processor attempts to write to main memory, the cache controller compares the main memory location address to the memory addresses stored in its tag memory to determine whether the contents of this main memory location have been stored in cache memory. ("Tag memory" is a RAM memory in which the cache controller stores the addresses of the main memory locations which are currently stored in the. cache memory.) If they have, a "write hit" has occurred. If they have not, a "write miss" has occurred. If the processor is operating in what is known as "write-through" mode, all processor write requests are written to main memory whereas only write hits are written also to cache memory. In contrast, if the cache controller is operating in what is known as "copy-back" mode, the processor will write to cache memory alone in the event of a write hit, except in certain circumstances, and will write to main memory in the event of a write miss. The updating of the main memory for a write hit is delayed until a read miss occurs that forces old data to be "copied back" to main memory in order to make room for new cache data. The cache memory may or may not be updated for write misses depending upon the cache, memory update scheme being used.

There are two situations where a reversion to the slower write-through mode must be performed. The first is when there is main memory present on an expansion bus which cannot be disabled if there is a bus snoop hit (to be explained later). The second is when the memory location being written to is a memory mapped I/O location, such as a video display RAM.

Frequently, a write by the processor to main memory is done by way of a "posted write." As will be explained in more detail later, a posted write entails latching the address of the addressed main memory location into the cache controller and latching the data into buffered bus transceivers. The processor is then freed to execute its next bus operation and the cache controller handles the remainder of the write bus operation.

When the processor attempts to read from a main memory location, the cache controller compares the main memory location address with its "tag memory" to determine whether the contents of the addressed memory location has been written into cache memory. If it has, this is called a "read hit." Upon a read hit, the cache controller disables the main memory and causes the cache memory to respond as if it were main memory. The processor thus reads from cache memory. If the location the processor is attempting to read has not been written to cache memory, a "read miss" has occurred. The processor will then read the main memory location and, in one common scheme, the contents of this main memory location will also be written into cache memory. The cache controller will then update its tag memory to indicate that the contents of this main memory location are now stored in cache memory.

Heretofore, cache memories operating in the copy-back mode have been used only in larger computer systems such as mainframe computers and mini-computers. Cache memories used in microprocessors have been able to operate only in the write-through mode.

One such cache memory controller for microcomputer systems based on the Intel 80386 chip, or equivalent, is the Intel 82385 cache controller. The Austek 38152 is another such cache memory controller.

These two cache controllers have limitations which limit the throughput improvement which can be obtained by using cache memory. (Throughput improvement is the decrease in time required for the microcomputer system to execute programs due to a decrease in the time required for memory accesses. The more memory accesses performed when executing a program, the greater the throughput improvement that can be achieved by reducing the time required for memory accesses.) These limitations include the inability to operate in the copy-back mode and a maximum cache size of 32K bytes.

Perhaps the most significant limitation is the inability to operate in the copy-back mode. While the write-through technique guarantees real-time coherency, i.e., that cache memory is identical to its corresponding main memory locations, it exacts a penalty in terms of system bandwidth. During read hits in the write-through mode, the cache memory provides a fast access to the CPU, but additionally provides the system bus with a "free" cycle for use by another bus master such as a DMA controller (a very common function and a very frequent bus master in current PC systems, especially higher performance PC systems), thus increasing system bus bandwidth and system throughput. However, during write hits in the write-through mode, the symmetric advantage is not available since every write to the cache is simultaneously (nearly simultaneously for "posted" writes) written to the main memory. This is to prevent a remote master from reading a location in main memory that has been updated in the cache memory but not copied back into main memory.

In the copy-back mode processor writes to cache memory are copied to the main memory only upon a read miss. Upon a read miss, the cache controller first checks the location in cache memory into which data from the addressed main memory location is to be written to see if it is "dirty." A cache memory location is dirty if it has been updated but its corresponding main memory location has not. If the selected cache memory location is dirty, the cache controller writes the contents of the selected cache memory location into the corresponding main memory location. The cache controller then causes the contents of the addressed main memory location to be written into the selected cache memory location and also provided to the processor. The cache controller also updates its tag RAM to indicate the new main memory location to which the selected cache memory location now corresponds. The copy-back mode relieves significant bus bandwidth for other operations and is especially useful for DMA's on the system bus, such as disk accesses. However, the Intel 82385, and the Austek compatible chip, not only cannot operate in the copy-back mode, but the Intel data sheet implies that the copy-back mode cannot be used with the 80386 microprocessor.

Intel, in its most recent microprocessor, generally known as the Intel 486, provided certain design features absent in the 386 and 286 microprocessors which allows cache controllers to operate in the copy-back mode. Specifically, the 486 has what is termed a "back-off" (BOFF) input. If, during a DMA operation, the BOFF input is asserted true, the 486 throws out what it is doing and hands over the bus to the DMA operation. After the DMA operation is complete, the 486 then reexecutes the bus operation it was doing when the DMA operation began. This permits the deadlocks to be resolved in the copy-back mode which were thought to be unresolvable in devices without a BOFF input.

A problem, that the copy-back mode has which is not present in the write-through mode, occurs when a remote bus master attempts to read from main memory such as when a DNA takes place. The problem is that when copy-back is used, main memory is much less likely to be coherent with cache memory than when write-through is used. Consequently, when a DNA occurs, the contents of the addressed main memory location may be wrong, i.e., data may have been written into a cache memory location corresponding to the addressed main memory location but not yet written into the main memory location.

The present invention pertains to use of a cache controller in a microprocessor system comprising a microprocessor capable of executing a "locked instruction sequence." A locked instruction sequence is a sequence of instructions that cannot be interrupted in the middle of execution. The microprocessor is coupled to a first data bus, which in turn is coupled to a cache memory. The system also includes a peripheral device coupled to a second data busl which in turn is coupled to a main memory. The system also includes transceiver means for driving the first data bus with data from the second data bus, and for driving the second data bus with data from the first data bus. Thus, the transceiver means permits the peripheral device to access the cache memory, and the microprocessor to access the main memory. In such a system, if the peripheral device attempts to access the cache memory via the second bus, transceiver means and first bus, while the microprocessor executes a locked write instruction which causes the microprocessor to access vain memory via the first bus, transceiver means and second data bus, the microprocessor system can lock up if the processor lacks a backoff pin. The present invention overcomes this problem.

In one embodiment of the invention, all microprocessor locked instruction sequences commence with a locked read instruction. Control means are provided for determining whether the peripheral device currently controls the second data bus. If the peripheral device controls the second data bus, and the microprocessor commences a locked instruction sequence (which always starts with a locked read instruction), the microprocessor ready input line is asserted false by the control means until the peripheral device relinquishes control of the second data bus. While the ready input line is asserted false, the microprocessor treats the first data bus as an input bus containing invalid data, and will not attempt to drive the first data bus with data. This permits the peripheral device to access the cache memory via the transceiver means and first data bus.

If a locked instruction sequence is being executed while the peripheral device requests control of the second data bus, the control means will deny the peripheral device control of the second data bus for the duration of the locked sequence.

By following this protocol, lockup will not occur.

## BRIEF DESCRIPTION OF THE DRAWINGS

Fig. 1 is a block diagram showing cache organization for a 32KB cache memory that is direct mapped;

Fig. 2 is a block diagram showing cache organization for a 32KB cache memory with two-way set associativity;

Fig. 3 is a block diagram showing cache organization for a 32KB cache memory with four-way set associativity;

Fig. 4 is a block diagram of a prior art microcomputer system having a cache memory which uses the prior art Intel 82385 cache controller;

Fig. 5 is a block diagram of a microcomputer system having a cache memory which uses the cache controller of this invention;

Fig. 6 is a block diagram showing the hardware interface for various control inputs and outputs to the cache controller of Fig. 5;

Figs. 7A, 7B are are detailed block diagrams of the cache controller constructed in accordance with this invention; and

Figs. 8-10 are state diagrams which show the operation of the cache controller of Fig. 7.

## DETAILED DESCRIPTION OF THE DRAWINGS

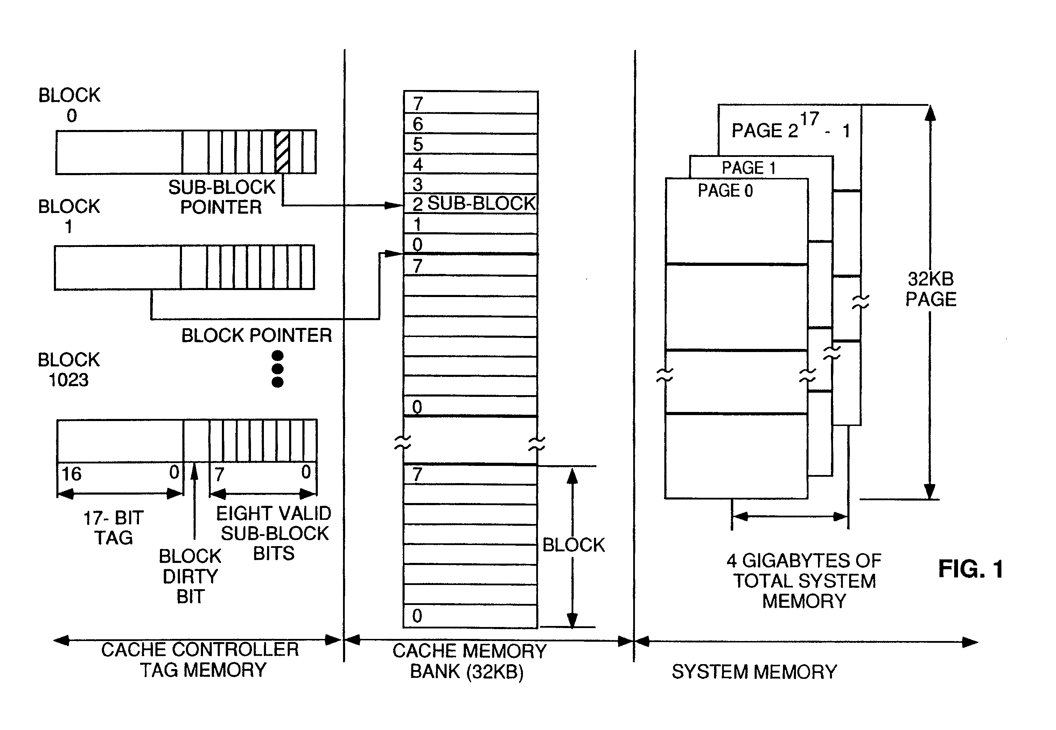

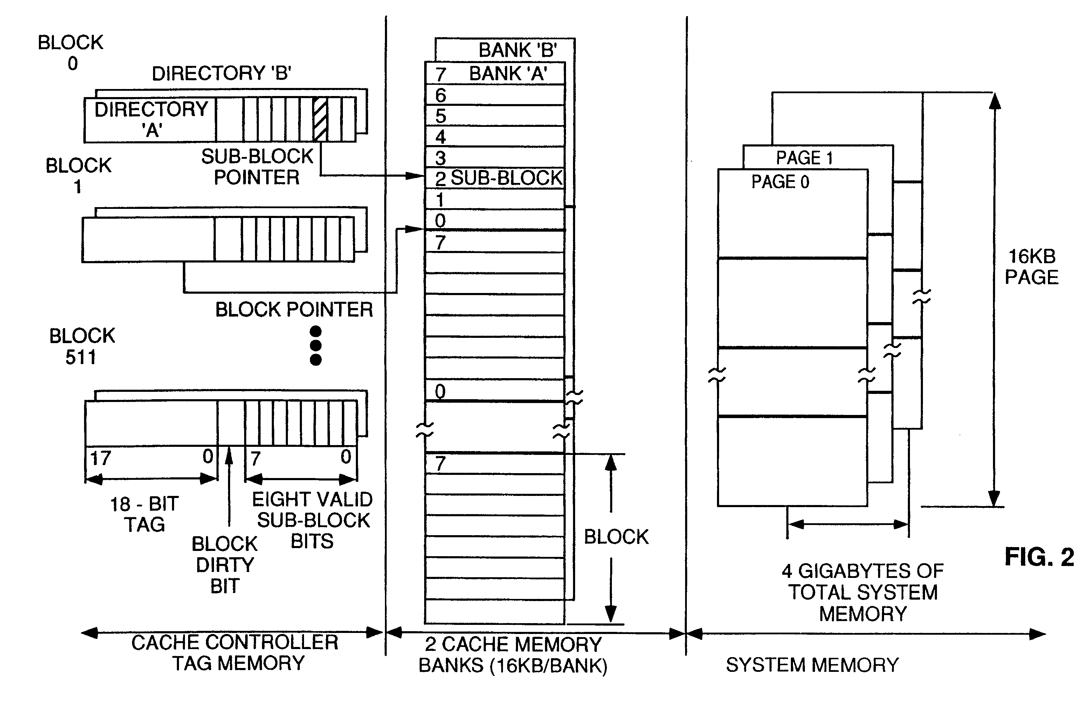

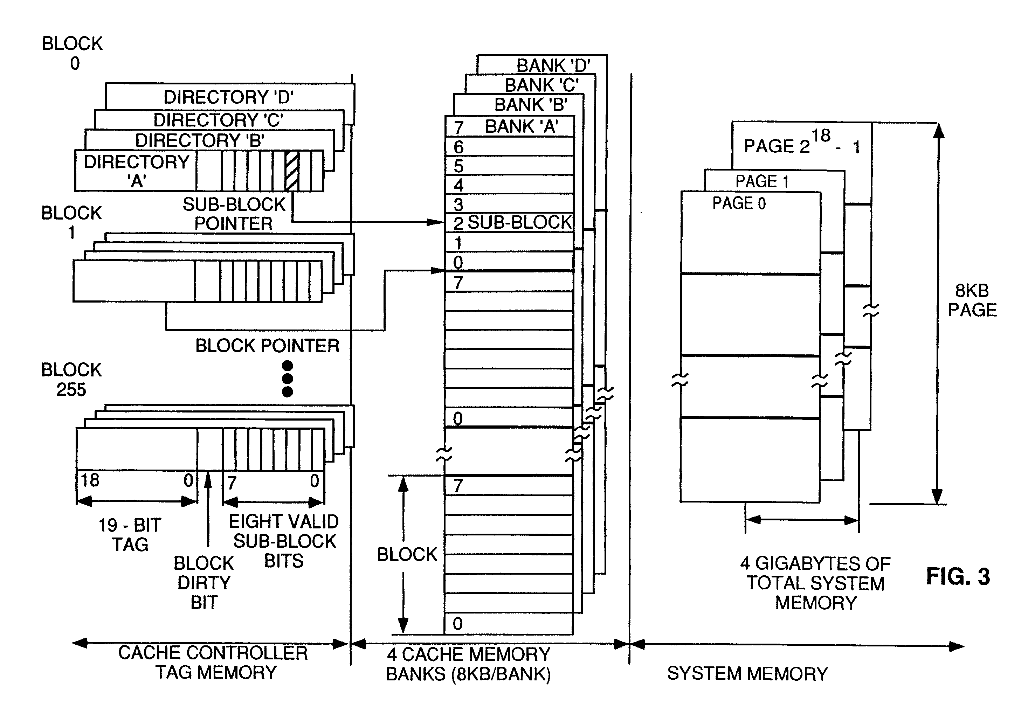

Cache memory is organized depending on its set associativity. Set associativity determines which locations in main memory can be written to which locations in cache memory. It ranges from direct-mapping to full set associativity. Full set associativity allows any main memory location to be written to any cache memory location while direct mapping permits a given main memory location to be written only to one cache memory location. Depending on its set associativity, a cache memory is divided into one or more banks. A direct mapped cache has only one bank. A cache having two-way set associativity has two banks and a cache having four-way set associativity has four banks. Main memory is divided into segments called pages of equal size to the cache banks. For example, as shown in Fig. 1, if the size of cache memory is 32K, each page will be 32K in a direct mapped configuration. In a cache memory having two-way set associativity, as shown in Fig. 2, each page will be one-half the cache memory size, i.e., 16K for a 32K cache memory, and in a cache memory having four-way set associativity, as shown in Fig. 3, each page will be one-fourth the cache memory size, i.e., 8K for a 32K cache memory.

Each page in main memory or each bank in the cache consists of several blocks. Each block has its own tag in the cache controller's tag RAM which will also be referred to as the cache directory. Thus, consecutive blocks in the physical space of the cache can be logically non-consecutive. As shown in Figs. 1-3, the data structure for each tag includes a tag field, a "dirty" block bit, and a "valid" bit for each sub-block in the block. The tag field identifies the associated block address in main memory. The dirty block bit is set or cleared to indicate whether any of the sub-blocks have been updated and are not coherent with their corresponding locations in main memory. The valid bit is set or cleared to indicate whether the associated sub-block is being used or is available for use.

Again as shown in Figs. 1-3, each block consists of a fixed number of sub-blocks grouped together under a single tag in the cache directory. A sub-block is the smallest amount of informa tion that is exchanged between the main and cache memory when swapping data from main memory into cache memory or for an update from cache memory to main memory. The size of each sub-block changes in proportion to the size of cache memory. All sub-blocks in a block are from sequential memory locations since the tag for the block contains the base address of the block.

It is important to note the distinction between a sub-block and a word. A sub-block, as discussed, is the smallest unit of information exchange between cache memory and main memory. A word defines the largest unit of exchange between the central processing unit (CPU) and either the cache memory or main memory. Sub-block size varies in direct proportion to the size of cache memory since the total number of blocks in the cache memory and the number of sub-blocks per block remain constant due to the constant number of tags and valid bits available.

Direct mapping is the simplest type of set associativity. As shown in Fig. 1, the main memory is logically divided into pages equal in size to the cache memory bank. Each location in cache memory is pointed to by a tag and an offset. The tag identifies the block and the offset identifies the sub-block location within the block. The tag is in fact an address pointer whose contents point to the page in main memory from which the block contained at that location in the cache memory has been copied. Since the tag for each block can contain the address of any page, consecutive blocks in the cache can be selected randomly from any page. However, in a direct mapped configuration, the location of each block in the cache memory must map directly, i.e., correspond, to its location in its page in main memory. Further, since the position of a sub-block within a block is determined by its offset, the sub-blocks within a block copied into the cache memory must also correspond between main memory and cache memory.

In operation, the CPU provides the complete address of the main memory location to be accessed on a read or write cycle. To determine a hit, tag comparators in the cache controller compare the contents of the tags with the high order address bits that determine the page in main memory. If there is a hit, the cache memory is enabled by the output of the appropriate tag comparator, and the remaining address bits drive the address lines of the cache memory to access the chosen location.

An n-way set associative organization divides the cache memory into 'n' banks as shown in Fig. 2 for two-way set associativity and Fig. 3 for four-way set associativity. The same offset location is now available to 'n' pages in main memory, since each one of these locations now resides in a different cache bank. Direct mapping is essentially one-way set associativity.

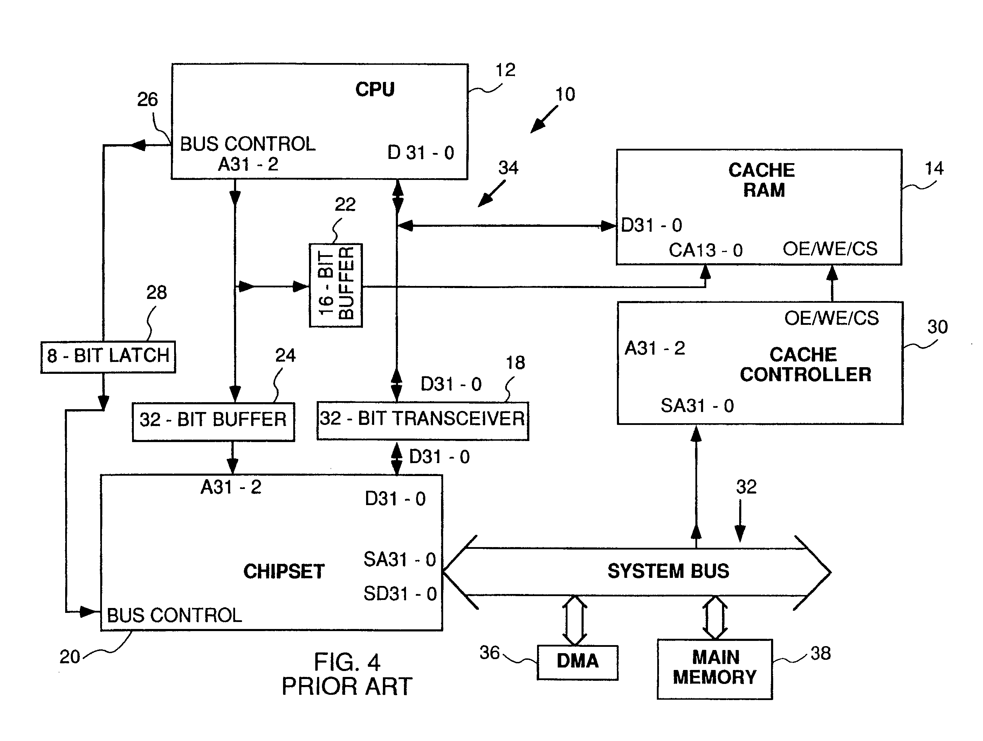

Fig. 4 is a block diagram of a microcomputer system based upon the Intel 80386 microprocessor and having a cache memory controlled by the prior art Intel 82385 cache controller. Microcomputer system 10 has a central processing unit (CPU) 12, illustratively an Intel 80386 microprocessor. Microcomputer system 10 also has a "local" bus 34 and a "system" bus 32. As is well understood, microcomputer systems have an internal or local bus and an external or system bus. The local bus consists of address, data, status and control signals at the pins of the microprocessor. The system bus is a buffered version of the local bus and may differ somewhat from the local bus in the way in which it handles status and control lines and timing.

Microprocessor 12 has data ports D31-0 coupled via local bus 34 to a cache memory 14 and to processor side inputs of a 32-bit transceiver 18. The term "port" will be used to describe that which can selectively act as both an input and an output. A chipset 20 has transceiver side data ports D31-0 coupled to a chipset side data ports D31-0 of 32-bit transceiver 18. As is commonly understood by those familiar with personal computer and workstation design, "chipset" means a set of Large Scale Integration (LSI) parts that integrate into a small number of parts (about six or fewer) the components required to perform the various peripheral system functions of interrupt handling, timer/counter/clocks, bus timing, bus management, memory management, and in some cases external device interfaces. Such chipsets can be purchased as sets or as individual components. One such chipset that could be used here is the TACT 83000 manufactured by Texas Instruments.

Microprocessor 12 also has address outputs A31-2 coupled via local bus 34 to inputs of a 16-bit buffer 22, to inputs of a 32-bit buffer 24, and to address ports A31-2 of a cache controller 30. Outputs of the 16-bit buffer 22 are coupled to the address inputs CA13-0 of the cache RAM 14. Illustratively, cache controller 30 is an Intel 82385 cache controller. Outputs of 32-bit buffer 24 are coupled to address inputs A31-2 of chipset 20. Microprocessor 12 further has bus control outputs 26 coupled via local bus 34 to inputs of an 8-bit latch 28. Outputs of 8-bit latch 28 are coupled to bus control inputs of chipset 20.

Chipset 20 has system address outputs SA31-0 coupled to system address lines SA31-0 of system bus 32. System address lines SA31-0 are also coupled to snoop address inputs SA31-0 of cache controller 30. Chipset 20 also has system data ports SD31-0 coupled to data lines SD31-0 of system bus 32. Remote bus master devices, such as DMA device 36, and main memory 38 are coupled to system bus 32. Cache controller 30 further has cache memory control outputs OE/WE/CS coupled to control inputs OE/WE/CS of cache memory 14.

(A description of the inputs and outputs of cache controller 30 can be found in the data sheet for the Intel 82385 cache controller.)

In operation, cache controller 30 must respond appropriately to three types of memory accesses, namely, a processor read, a processor write, and a remote bus master write. Remote bus master devices which access main memory are often DMA devices such as disk controllers, so such accesses will be described in terms of DMA reads and writes. On a processor write, the data is always written into main memory 38 as cache controller 30, being an Intel 82385, operates only in the write-through mode. When a processor write occurs, cache controller 30 compares the main memory address put out by processor 12 on address lines A31-2 of local bus 34 to the main memory locations stored in its tag RAM to determine if a write hit has occurred. If one did, then the data is also written into the appropriate location in cache memory 14.

On a processor read, cache controller also compares the address of the main memory location from which data is to be read with its tag RAM to determine if a read hit occurred. If so, cache controller 30 causes the read to be done from cache memory 14 and not from main memory 38. On a read miss, the read is done from main memory 38 and the contents of the addressed main memory location are also copied into the appropriate location in cache memory 14. Since cache controller 30 operates only in the write-through mode, cache memory 14 is always coherent with main memory 38. Consequently, on a read miss, the contents of the addressed main memory location can be written into the appropriate location in cache memory 14 without worrying that this location in cache memory 14 location has more current data than that stored in the corresponding main memory location, i.e., is incoherent with the corresponding main memory location.

In the write-through mode, DMA reads and writes are done directly from and to main memory. On a DMA read, the contents of the addressed main memory location are read. Cache memory 14 remains unaffected and processor 12 can continue to run using cache memory 14 until a read miss or two processor writes occur.

On a DMA write, the write is also done directly to main memory. The data is not written into cache memory. Consequently, controller 30 must monitor DMA writes to determine whether the main memory location addressed is also stored in cache RAM 16. This is called "snooping." If the main memory location addressed was also stored in cache memory 14, this cache memory 14 location will no longer be coherent with the corresponding main memory location. Controller 30 determines this and clears the "valid" bit in its tag RAM associated with this cache memory 14 location. This indicates that the contents in this cache memory 14 location are no longer available to be read and is available to be written to so that any attempt to read the main memory location corresponding to this cache memory 14 location will result in a read miss. The above discussed "snooping" scheme is used by the Intel 82385. Alternatively, the processor could be held on every DMA cycle and DMA writes could also be written to cache memory upon write hits. However, this scheme further reduces the throughput improvement that can be achieved by using cache memory.

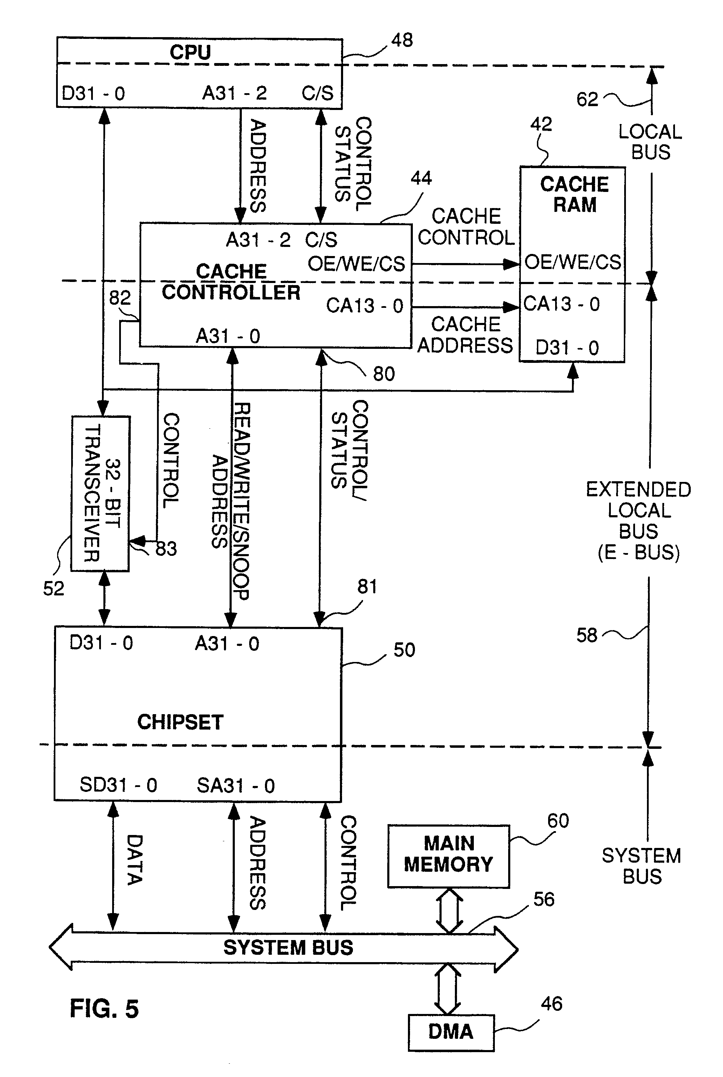

Referring to Fig. 5, a microcomputer system 40 having a cache memory or cache RAM 42 controlled by a cache controller 44 constructed in accordance with this invention is shown in simplified block diagram form. Microcomputer system 40 also includes a CPU 48, illustratively an Intel 80386 microprocessor, a chipset 50, and a 32-bit transceiver 52. It should be understood that the reference to the Intel 80386 as an example of CPU 48 does not limit this invention to any specific microprocessors such as the Intel 80386. Microcomputer system 40 has a processor or local bus 62 and a system bus 56. The local bus 62 is intercepted by cache controller 44 and 32-bit transceiver 52 and driven to chipset 50 as an extended local bus 58. That is, cache controller 44 is interposed between CPU 48 and the system bus 56. Cache controller 44 intercepts the control and address lines from CPU 48 and system bus 56 and propagates them appropriately. Data passes externally of cache controller 44 through 32-bit transceiver 52 and also is driven into and out of cache RAM 42 as appropriate.

CPU 48 has address outputs A31-2 and control/status output C/S coupled via local bus 62, respectively, to CPU side address inputs A31-2 and control/status input C/S of cache controller 44. Microprocessor 48 also has data ports D31-0 coupled via local bus 62 to data ports D31-0 of cache memory 42 and to CPU side data ports D31-0 of 32-bit transceiver 52. Chipset 50 has address ports A31-0 coupled to chipset side address ports A31-0 of cache controller 44 and data ports D31-0 coupled to chipset side data ports of 32-bit transceiver 52. Chipset 50 also has data ports SD31-0 and address ports SA31-0 coupled to system bus 56. Main memory 60 is coupled to system bus 56 as is DMA device 46.

Cache controller 44 has cache memory address outputs CA13-0 coupled to cache memory address inputs CA13-0 of cache memory 42. Cache controller 44 also has cache memory control outputs $\overline{OE}/\overline{WE}/\overline{CS}$ coupled to control inputs $\overline{OE}/\overline{WE}/\overline{CS}$ of cache memory 42, respectively.

Cache controller 44 further has control ports 80 coupled to control ports 81 of chipset 50 and control outputs 82 coupled to control inputs 83 of 32-bit transceiver 52. The chip set has a control output connected to the system bus.

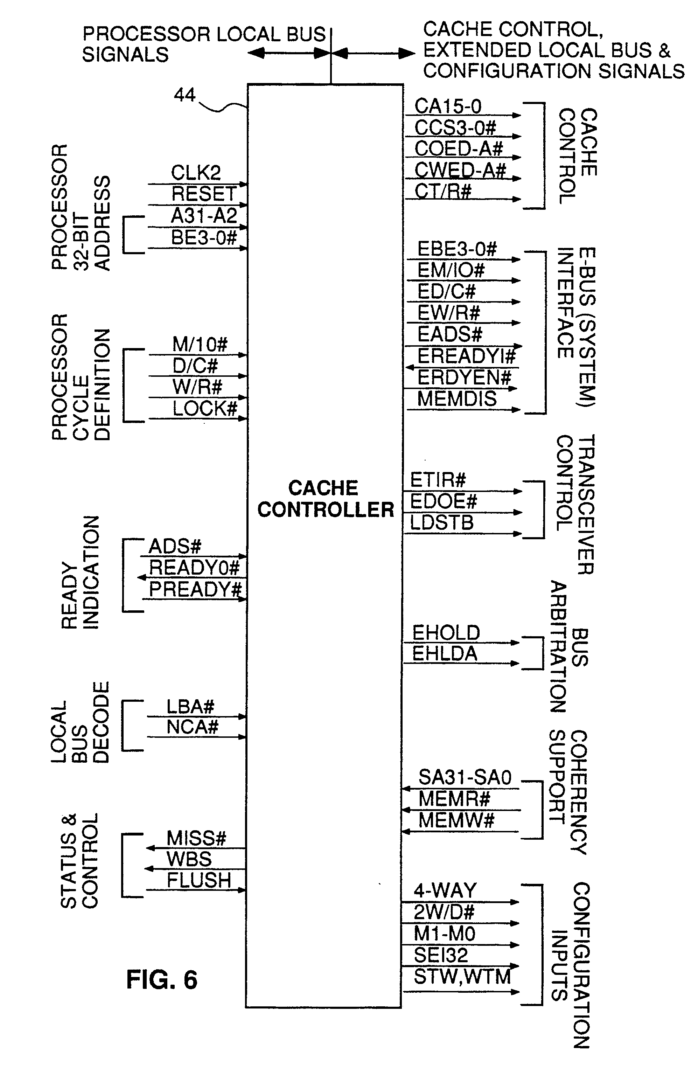

Fig. 6 is a block diagram showing in more detail the hardware interface for the various control inputs and outputs of cache controller 44 to CPU 48, chipset 50 and 32-bit transceiver 52 for one design. The mnemonics used to identify the various inputs and outputs of the elements of Fig. 6 are described in Table A. The mnemonics in Table A not shown in Fig. 6 are available on pins of the cache controller 44 for use with other types of CPU's and in other configurations. As used herein, a "#" following a mneumonic indicates that the input, output, or signal is true at a low logic level.

Cache controller 44 supports direct mapping, two-way, and four-way set associativity. As described in Table A, cache controller 44 has a 4WAY input and a 2W/D# input. When the 4WAY input is high, 4-way set associativity is selected. When the 4WAY input is low, the 2W/D# input controls the set associativity and selects two-way set associativity when high and direct mapping when low.

Cache controller 44 also supports cache memory sizes of 32K, 64K, 128K, and 256K. Cache controller 44 has inputs M0-1 which select the size of cache memory 42 which cache controller 44 controls as shown in Table A.

Cache controller 44 must ensure coherency between main memory 60 and cache memory 42. It does so either by a write-through mode or a copy-back mode depending upon the status of its WTM (write-thru mode) and WTO (write-thru only) inputs as described in Table A. In the write through only mode, cache controller 44 operates in the same manner as the prior art Intel 82385 cache controller so the write-through only mode will not be discussed further.

In the copy-back mode, data from CPU 48 is written only to main memory 60 upon a processor write miss and written only to cache memory 42 upon a processor write hit. Cache controller 44 causes CPU 48 updates of cache memory 42 to be written to main memory 60 only upon a read miss and where the selected cache memory 42 location is incoherent with its then corresponding main memory location. Consequently, cache controller 44 must ensure that the contents of the cache memory locations to be swapped out have been updated to the corresponding locations in main memory 60 before overwriting these cache memory locations with new data. To accomplish this, a "dirty" bit in the tag for each block marks whether the block contains any locations that have been updated by the CPU 48 but have not been copied to main memory 60. A write done by CPU 48 to a location in cache memory 42 does not simultaneously update the corresponding main memory location. Instead, the appropriate "dirty" bit for the block containing this byte is set. When a write miss occurs upon a CPU 48 write, cache controller 44 disables the write enable signal WE to cache RAM 42 and latches the data and address from CPU 48 into 32-bit transceiver 52 and into its internal address latches, respectively, as a posted write. This frees local bus 62 so that CPU 48 can execute its next cycle without waiting for completion of the write. Also, local bus 62 is available to cache controller 44 so that it can service snoop hits from remote bus master devices as will be described in more detail later. After a second consecutive write miss, CPU 48 must be made to wait by asserting PREADY# false until the previous write is completed to main memory 60 since the latches can only hold one posted write.

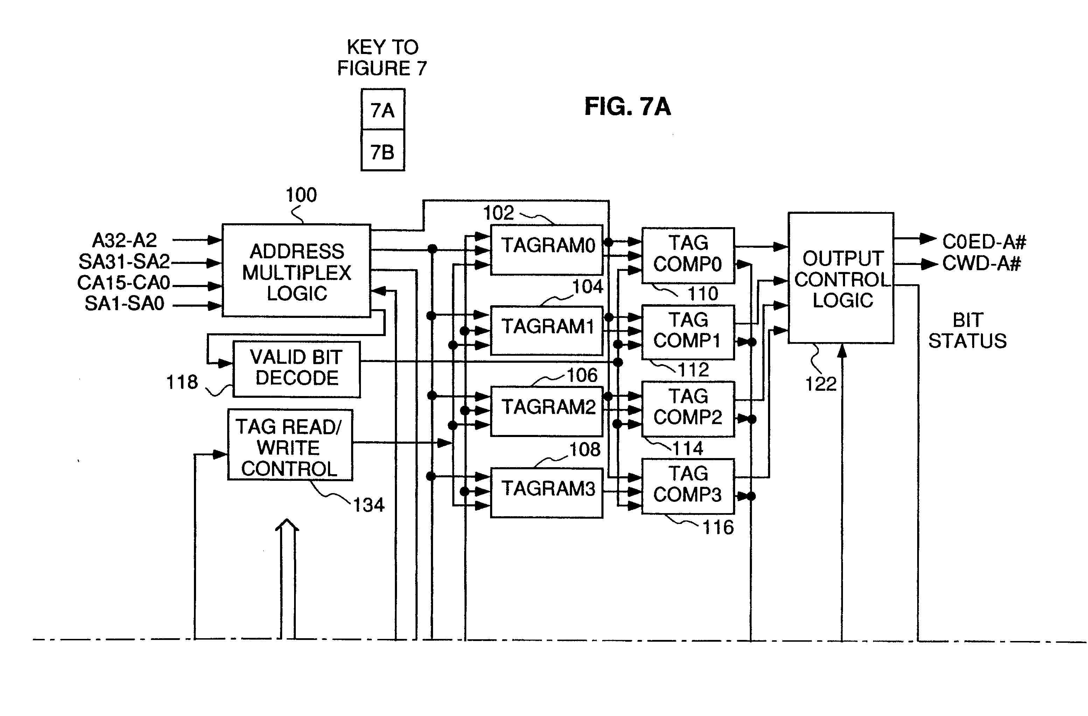

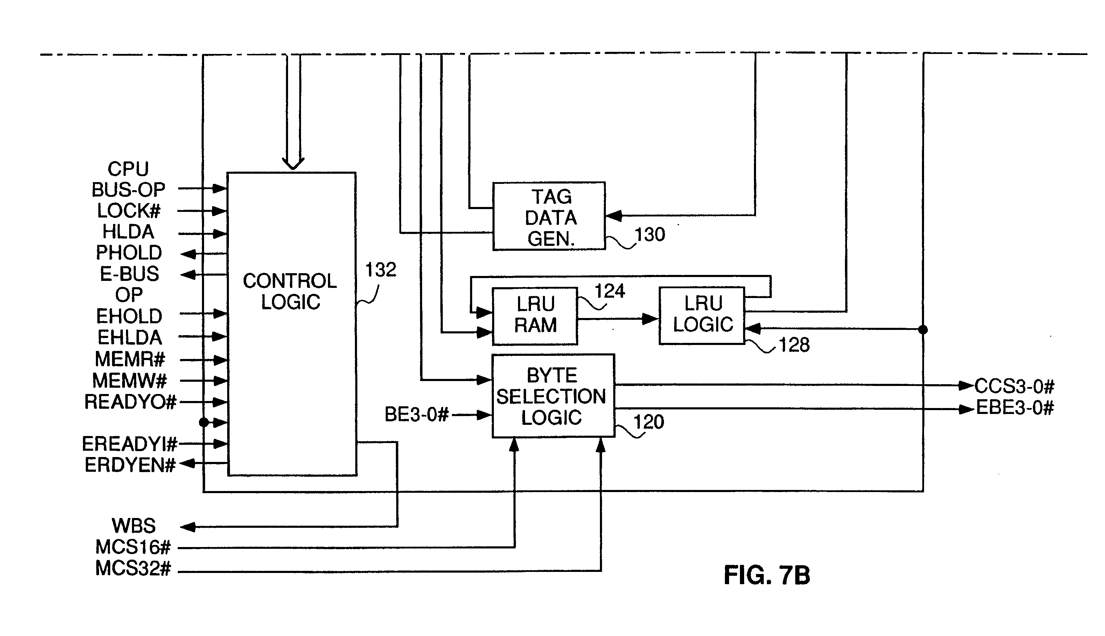

When a read miss occurs upon a CPU 48 read, cache controller 44 first asserts the processor READY# signal false. If direct mapping is not being used, cache controller examines its LRU bits (Fig. 7) for the two (two-way set associativity) or four (four-way set associativity) available blocks to select the block to be updated from main memory 60. If the dirty bit of the tag RAM location for the selected block is set, cache controller 44 then checks the valid bits in that tag RAM location for the sub-blocks within the selected block to determine if any of the sub-blocks must be copied to main memory 60. Cache controller 44 copies to main memory 60 any sub-block marked valid, i.e., whose valid bit is set, and then clears all the valid bits for the sub-blocks within the selected block and also clears the dirty bit for the selected block. During this phase, cache controller 44 controls cache memory 42 and 32-bit transceiver 52 to drive the data from the sub-blocks marked valid on to the extended local bus 58. Cache controller 44 also monitors the EREADY# signal from chipset 50 and initiates consecutive sub-block copy-back cycles until all the valid sub-blocks of the dirty block are written to main memory 60.

Cache controller 44 then forwards the read request from CPU 48 to main memory 60 by asserting the read cycle address and control signals on the extended local bus 58 and reads the contents from the locations (termed the "replacement sub-block") in main memory 60 to be written into the appropriate sub-block within the selected block in cache memory 42. To allow CPU 48 to read the appropriate word within the replacement sub-block, i.e., the addressed main memory 60 location, cache controller 44 passes the EREADYI# signal from the extended local bus 58 to local bus 62 for the appropriate bus cycle.

Cache controller 44 also sets the valid bit for the sub-block which it has just updated in cache memory 42 in its appropriate tag RAM location. Cache controller 44 must also ensure that coherency is maintained for memory accesses by remote bus master devices. For example, a remote bus master device may try to read a main memory location that has been updated in cache memory 42 but not yet posted to main memory 60. Also, lack of coherency could result if a remote bus master device writes to main memory 60 while cache controller 44 is not the bus master. In this case, if the addressed main memory location being written to is currently duplicated in cache memory 42, the data in cache memory 42 corresponding to the addressed main memory location would become obsolete.

To maintain coherency, cache controller 44 snoops for read and write hits resulting from reads and writes by remote bus master devices by monitoring system bus 56 via chipset 50 for an EHOLD signal or request from a remote bus master. If the cache controller 44 has not received a lock signal (explained below) from the CPU 48, it will generate a EHLDA acknowledgment signal to the remote bus master and begin a snoop, as will be explained below. In snooping for read hits, cache controller 44 checks main memory read cycle addresses to see if a remote bus master device is attempting to read data from a main memory location that is also stored in cache memory 42 in a block that has its corresponding "dirty" bit set. In snooping for write hits, cache controller 44 checks the address of the addressed main memory location to be written to by a remote bus master device to determine if a copy of the addressed main memory location is also stored in cache memory 42. If so, a snoop write hit has occurred.

In the event of a snoop read hit, cache controller 44 will drive the appropriate data from cache memory 42, assert a memory disable (MEMDIS) signal true to disable the output of main memory 60 to system bus 56, and drive the output of cache memory 42 through 32-bit transceiver 52. This data is held enabled at the chip set 50 until EREADYI# on the extended local bus 58 is asserted true, indicating the end of the current read cycle. Thus, any remote bus master device, such as DMA device 46, will receive the correct data as if the data were in main memory 60.

In the event of a snoop write hit when cache controller 44 is in the copy-back mode, the affected sub-block may contain data which have been updated by CPU 48 but have not been copied back to the corresponding location in main memory 60. This is detected if the "dirty" bit of the block to which the affected sub-block belongs is set. Cache controller 44 will then cause the affected sub-block to be updated by executing a write on cache memory 42 at the same time as the write is executed on main memory 60.

Since CPU 48 runs asynchronously with the remote bus master devices coupled to system bus 56, snoop hits can occur while the processor is doing a read/write operation out of cache memory 42 on local bus 62. If a snoop hit occurs while CPU 48 is doing a read, cache controller 44 asserts false the READYO# line on local bus 62 coupled to the READY# input to CPU 48 to stop the CPU read for an extra cycle until the remote bus master device access to cache memory 42 is completed. For a snoop read hit, the data from the cache memory 44 is read and passed through the 32-bit transceiver 52, while for a snoop write hit, the remote data is written into the cache memory 42 in one cycle. This minimizes the time penalty to the CPU 48.

If a snoop hit occurs while CPU 48 is in the middle of a write operation or is idle, cache controller 48 asserts true the HOLD line on local bus 62 to assert true the HOLD input of CPU 48. CPU 48 continues until the write is completed either by writing to cache memory 42 or by latching the address into the internal address latches (Fig. 7) of cache controller 44 and latching the data into 32-bit transceiver 52 for a posted write to be executed later. After CPU 48 completes the write operation, it is held due to its HOLD input being asserted true and asserts true a hold acknowledge signal HLDA to the cache controller 44. The remote bus master then has immediate access to cache memory 42 and progresses with a read or write thereto. In this instance, the data from CPU 48 is latched in 32-bit transceiver 52 and cache controller 44 directs data transfers between cache memory 42 and chipset 50 to go through the bypasses which are understood to be a part of 32-bit transceiver 52. In this case, the data from a cache snoop read hit cannot be latched, since the latch may be already occupied with data for the posted write to be initiated later. The processor in this case must be held until the end of the DMA operation. After EHOLD from the DMA device goes false, EHLDA is taken false, the processor HOLD is released, and a posted write is initiated if necessary.

Microprocessors, such as the Intel 80386, have what are known as "locked sequences" of bus operations which could lead to deadlocks in systems having cache memory. When executing a locked sequence of bus operations, the microprocessor will refuse to relinquish control of the local bus until it completes the locked sequence of bus operations. The deadlock is caused when a snoop hit occurs while CPU 48 is doing a write as part of a locked sequence of bus operations. Since CPU 48 is executing a locked sequence of bus operations, it will not recognize its HOLD input being asserted true by cache controller 44 and consequently will not hold after it completes the write. Therefore, cache controller 44 cannot gain control of local bus 62 and thus cannot service the snoop hit.

Cache controller 44 resolves this deadlock by monitoring CPU 48 for read operations when cache controller 44 is not the master of system bus 56, since invariably, a locked sequence of bus operations begins with a read. When cache controller 44 is not the master of system bus 56, it has brought its EHLDA output true indicating that it has relinquished control of system bus 56 to a remote bus master device in response to an EHOLD request. A snoop hit can occur only when cache controller 44 has given an EHLDA acknowledge thereby relinquishing control of system bus 56. Consequently, if cache controller 44 has given EHLDA true and it detects a locked read operation by CPU 48, cache controller 44 will assert the READY# input to CPU 48 false until DMA device 46 relinquishes control of system bus 56 by asserting signal EHOLD false.

Since CPU 48 will wait until its READY# input is no longer asserted false before completing the read operation, this frees local bus 62 for use by cache controller 44 to service the snoop hit. Alternatively, if cache controller 44 has not given EHLDA and it detects that CPU 48 has asserted true its LOCK# output, cache controller 44 will in effect disable itself by refusing to give EHLDA until the LOCK# output of CPU 48 goes false. Since cache controller 44 will be the master of system bus 56, no memory accesses by remote bus master devices can occur.

When in the direct mapping mode, cache controller 44 responds to main memory accesses by CPU 48 as follows. The tag RAM of cache controller 44 has a tag for each block in cache memory 42. The tags are structured as discussed previously as including a tag field identifying the associated block address in main memory, a dirty block bit which is set or cleared to indicate whether any of the sub-blocks in the block have been updated and are not coherent with their corresponding main memory locations, and a valid bit for each sub-block in the block which are set or cleared to indicate whether the associated sub-blocks are being used or are available for use. (Table B summarizes the sizes and/or counts of sub-blocks, blocks, banks and pages for various cache sizes and mapping options supported by cache controller 44.) Cache controller 44, decodes the A31-2 address lines from local bus 62 into three fields: (i) a 17-bit tag field to determine which of the $2^{17}$ (128K) pages has been accessed, (ii) a 10-bit block address to select one among 1,024 blocks in cache memory 42, and (iii) three additional bits to select one of the eight sub-blocks in the selected block. Cache controller 44 then compares the 17-bit tag field with the 17-bit tag fields of the tags stored in its tag RAM to determine whether a cache hit, i.e., read or write hit, occurred. In the event of a cache hit, cache controller 44 drives cache memory 42 with the 13 remaining address lines to either write data into cache memory 42 or read data from cache memory 42, as the case may be.

When in the two-way set associativity mode, cache memory 42 is divided into two equal size banks. Each page in main memory is the same size as the banks of cache memory 42. A tag in the tag RAM is related to each block in each cache bank. Illustratively, each tag field is 18 bits wide to identify $2^{18}$ (256K) pages. The structure of the tags stored in tag RAM change accordingly. The number of pages double in comparison with direct mapping since the page/bank size drops by half. The single dirty bit for each block and eight valid bits for the eight sub-blocks remain unchanged.

When CPU 48 addresses memory and cache controller 44 is in the two-way set associativity mode, cache controller 44 decodes the A31-2 address lines from local bus 62 into three fields: (i) an 18-bit tag field to determine which of the $2^{18}$ pages has been accessed, (ii) a 9-bit block address to select one among the 512 blocks in the cache bank, and (iii) three additional bits to select one of the eight sub-blocks in the selected block. Cache controller 44 then compares the 18-bit tag field with the 18-bit tag field of the tags stored in tag RAM to determine whether a cache hit occurred. In the event of a cache hit, cache controller 44 drives cache memory 42 with the 12 remaining address lines to either write data into cache memory 42 or read data from cache memory 42, as the case may be.

When in the four-way set associativity mode, cache memory 42 is divided into four equal size banks. Each page in main memory is the same size as the banks of cache memory 42. A tag in tag RAM is related to each block in each cache bank. Illustratively, each tag is 19 bits wide to identify $2^{19}$ (512K) pages. Again, the structure of the tags stored in tag RAM must change accordingly. The number of pages quadruples in comparison with direct mapping since the page/bank size drops by one-fourth. The single dirty bit for each block and the valid bits for the eight sub-blocks remain unchanged.

When CPU 48 addresses memory and cache controller 44 is in the four-way set associativity mode, cache controller 44 decodes the A31-2 address lines from local bus 62 into three fields: (i) a 19-bit tag field to determine which of the $2^{19}$ pages has been accessed, (ii) an 8-bit block address to select one among the 256 blocks in the cache bank, and (iii) three additional bits to select one of the eight sub-blocks in the selected block. Cache controller 44 then compares the 19-bit tag field with the 19-bit tag field of the tags stored in tag RAM to determine whether a cache hit occurred. In the event of a cache hit, cache controller 44 drives cache memory 42 with the 11 remaining address lines to either write data into cache memory 42 or read data from cache memory 42, as the case may be.

Fig. 7 is a block diagram of cache controller 44 of microcomputer system 40 of Fig. 5. Cache controller 44 has address multiplex logic 100 having inputs coupled to address lines A31-A2 of local bus 62, inputs/outputs coupled to address lines SA31-SA2 of extended local bus 58, cache memory address outputs CA15-CA0 which are coupled to address inputs CA15-CA0 of cache memory 42, and inputs coupled to address lines SA1-SA0 of extended local bus 58. Note that cache controller 44 has sixteen cache memory address lines (CA15-CA0) to support a cache memory size of up to 256K. Address multiplex logic 100 has outputs coupled to inputs of tag RAMs 102, 104, 106, 108 (Tag RAMs 0-3), to inputs of tag comparators 110, 112, 114, 116 (Tag Comp. 0-3), to inputs of valid bit decoder 118, to inputs of byte selection logic 120, and to inputs of LRU RAM 124. Tag RAMs 102, 104, 106, 108 have outputs coupled to inputs of tag comparators 110, 112, 114, 116, respectively. Tag comparators 110, 112, 114, 116 have inputs coupled to outputs of valid bit decoder 118, outputs coupled to inputs of output control logic 122, and outputs coupled to inputs of a tag data generator 130. Tag data generator 130 has outputs coupled to inputs of tag RAMs 102, 104, 106, 108, and to inputs of address multiple: logic 100. LRU, RAM 124 has outputs coupled to inputs of LRU logic 128 which has outputs coupled to inputs of LRU RAM 124 and inputs of output control logic 122. LRU logic 128 also has an input coupled to a hit status output of output control logic 122.

The hit status output of output control logic 122 is also coupled to an input of control logic state machine) 132 and to an input of a tag read/write control 134. Tag read/write control 134 has outputs coupled to inputs of tag RAMs 102, 104, 106, 108. Output control logic 122 also has cache memory output enable outputs COED-A# coupled to corresponding inputs of cache memory 42 and cache memory write enable outputs CWED-A# coupled to corresponding inputs of cache memory 42.

Byte selection logic 120 has inputs coupled to byte enable lines BE3-0# of local bus 62 and inputs coupled to bus size lines MCS16# and MCS32# of extended local bus 58. Byte selection logic also has cache memory select outputs CCS3-0# coupled to corresponding inputs of cache memory 42 and extended local bus byte enable outputs EBE3-0# coupled to byte enable lines EBE3-0# of extended local bus 58.

Control logic 132 has inputs coupled to the CPU Bus-Op (ADS#, W/R#, D/C#, and M/IO#), LOCK#, HLDA, MEMR#, and MEMW# lines of local bus 62 and inputs coupled to the EHOLD and EREADYI# lines of extended local bus 58. control logic 132 has outputs coupled to the PHOLD, READYO#, and WBS lines of local bus 62 and outputs coupled to the E-Bus Op, (EADS#, EW/R#, ED/C#, and EM/IO#), EHLDA, and ERDYEN# lines of extended local bus 58. Control logic 132 is also appropriately interconnected to address multiplex logic 100, tag RAMs 102, 104, 106, 108, tag comparators 110, 112, 114, 116, valid bit decoder 118, byte selection logic 120, output control logic 122, LRU RAM 124, LRU logic 128, tag data generator 130, and tag read/ write controller 134.

During normal CPU 48 reads and writes, address multiple: logic 100 takes the address A31-A15 and distributes it appropriately to cache memory address outputs CA15-CA0, to tag RAMs 102, 104, 106, 108 (Tag RAMs 0-3), to tag comparators 110, 112, 114, 116, to valid bit decoder 118, to byte selection logic 120, and to LRU RAM 124. Valid bit decoder 118 decodes the address from address multiplex logic 100 which is then provided as inputs to tag comparators 110, 112, 114, 116. Tag comparators 110, 112, 114, 116, take address lines A31-A13 from address multiplex logic 100, the outputs of tag RAMs 102, 104, 106, 108, and the outputs of valid bit decoder 118 and make a determination of whether there has been a cache hit or miss. This determination of a hit or miss is then passed on to output control logic 122. Output control logic 122 then toggles the appropriate cache memory output enable COED-A# or cache memory write enable CWED-A# and also outputs the hit status output to control logic 132 and tag read/write controller 134.

Tag data generator 130 determines the data to be written into one of tag RAMs 102, 104, 106, 108, when that tag RAM is to be updated. Tag comparators 110, 112, 114, 116, under control of control logic 132, feed through the address from address multiplex logic 130 to tag data generator 130. Tag data generator 130 uses this address data to determine the data to be written to the tag RAM 102, 104, 106, 108, being updated. In other words, an address from address multiplex logic 100, as fed through one of tag comparators 110, 112, 114, 116, (selected by control logic 132) is massaged and written into the tag RAM 102, 104, 106, 108 being updated to update the appropriate tag field.

LRU RAM 124 is a 256x6 bit RAM and is used to keep track of the last bank used by CPU 48 in cache memory 42 for each corresponding cache location. LRU RAM 124 is initialized during a flush sequence to a fixed sequence of three unique two bit bank ID's. In a straight forward LRU method for a 4-way set associative cache, four unique two bit bank ID's would be stored. Since the fourth bank ID can always be derived from the other three, only three bank ID's are stored. LRU logic 128 performs the function of placing the most recently used bank's ID on the top of a stack that is two bits wide by three bank ID's deep. All other bank ID's that were above the most recently used ID are pushed down the stack. Since the stack is only three deep and there are four banks, the bank ID for the least recently used bank is derived logically from the other three bank ID's that are on the stack when cache controller 44 is in the four way set associative mode. In the two-way set associative mode, the least recently used bank pair is indicated by the inverted most significant bit of the most recently used bank ID. In the direct mapped mode, the LRU output is ignored.

During normal operation, byte selection logic 120 determines the appropriate cache memory chip select output (CS3-0#) or the appropriate extended local bus byte enable output (EBE3-0#) to assert based upon the byte enable lines (BE3-0#) of local bus 62. During a snoop operation, this changes in that in the event of a snoop hit, the appropriate bytes in cache memory 42 to be updated must be determined. This is determined from address lines SA1-SA0 of extended local bus 58 which are fed through address multiplex logic 100 to byte selection logic 120. Byte selection logic 120 then determines which bytes in cache memory 42 are to be updated. The MCS16# and MCS32# inputs from extended local bus 58 determine whether an eight-bit, a sixteen-bit, or a thirty-two bit operation is taking place.

In the event that a copy-back must be performed, tag read/write controller determines which cache memory 42 location that must be copied-back and also which tag RAM 102, 104, 106, 108, is to be written into. For example, in the event of a write hit in copy-back mode, it determines which tag RAM 102, 104, 106, 108, received the hit and needs its dirty bit set.

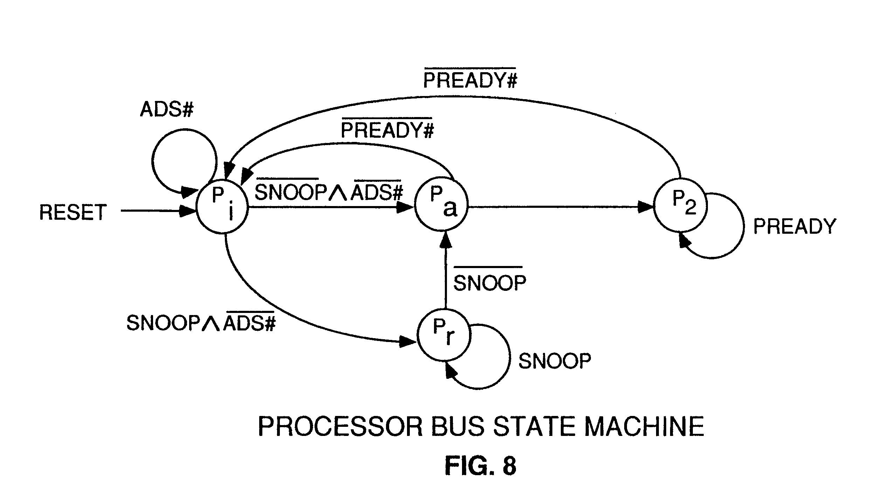

Figs. 8-10 are state diagrams of a processor state machine, a cache operation state machine, and an extended local bus state machine. Collectively, they represent the control functions implemented by control logic 132 of Fig. 7.

In the state diagrams of Figs. 8-10, transitions from one state to another occur when the result of the transition equation is a high logic level. For example, referring to Fig. 8, a transition between Pi and Pa occurs when the snoop signal anded with the ADS# signal results in a high logic level. Here, a "‾‾‾" over a signal indicates the "not" of that signal and not that the signal is false. In the above example, the transition from Pi to Pa occurs when snoop is false (i.e., low so that snoop is high) and ADS# is true (i.e., low so that ADS# is high).

The processor bus state machine of Fig. 8 depicts the state diagram for the portion of the control logic of cache controller 44 that follows the processor bus 62 operations and controls the interlock between processor bus 62 operations and snoop operations from the extended local bus 58. The processor bus state machine enters a Pi (idle) state from a RESET condition and stays in the Pi state until ADS# is asserted true (ADS# high). If snoop is true (i.e., a snoop operation is in progress) at the same time, then the processor bus state machine transitions to the Pi state. In the Pr state, a processor bus 62 request is pending but has not been satisfied due to the snoop operation in progress. If snoop was false (snoop high) at the time ADS# goes true (ADS# high), then the processor bus state machine transitions to the Pa (processor bus active) state.

If the processor bus state machine is in the Pr state, it will remain there until snoop goes false (snoop high) indicating that the snoop operation is completed. It will then transition to the Pa state.

When in the Pa state, if pready# goes true (pready# high), the processor bus state machine transitions to the Pi state. If pready# does not go true on the next clock cycle (i.e., pready# remains high), the processor bus state machine transitions to the P2 state and remains there until pready# goes true (pready# high), at which point the processor bus state machine transitions back to the Pi state. The P2 state is the second of ending state of processor bus 62 operations, i.e., the state between the end of the first clock cycle and the state transition that occurs during the second clock cycle. (Processor bus 62 operations typically require two clock cycles.)

If the processor bus state machine is in the Pa state, then a snoop operation will not be initiated. Conversely, if a snoop operation is underway, then the Pa state will not be entered. The pready# signal is not allowed to go true (i.e., low so that pready# is high) unless the processor bus state machine is in either the Pa or the P2 state.

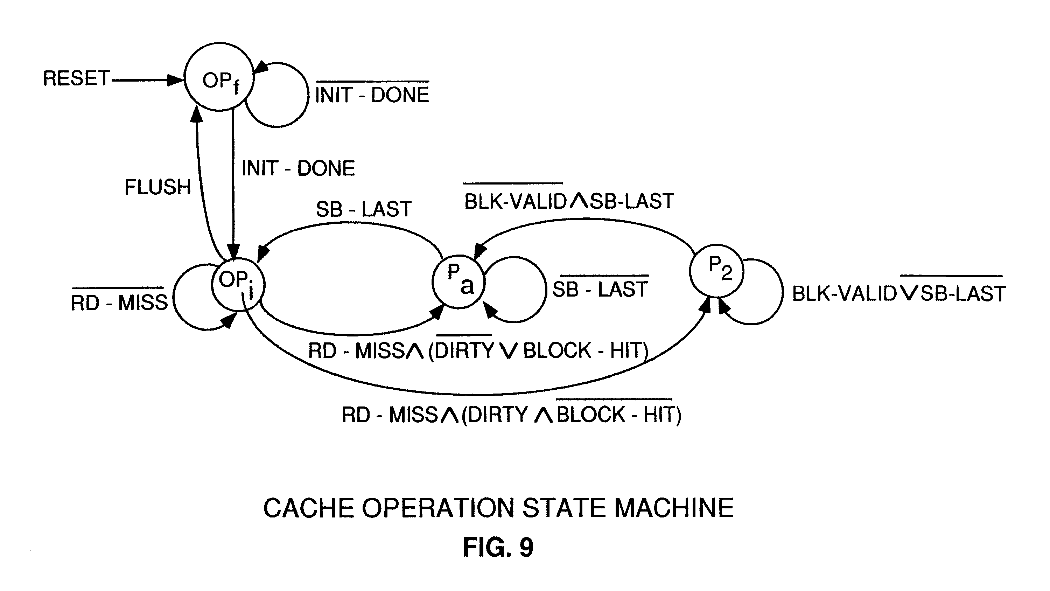

The cache operation state machine of Fig. 9 depicts the states during which cache RAM 42 is either filled or emptied. The cache operation state machine enter the OPf (flush) state from the RESET condition and stays in it until the init_done signal goes true. Init_done comes from the carry output of an eight bit address counter of cache controller 44 used to sequence through all of the cache tags within the cache controller 44. When the cache operation state machine enters the OPf state, a write operation is forced with all of the block valid and dirty bits within each tag being cleared. This initializes cache controller 44 to an empty cache condition. While in the OPf state, all processor bus 62 bus requests are handled as misses, except that no cache fills are performed.

When the cache operation state machine is in the OPi (idle) state, tag lookups are performed due to either processor bus 62 requests or snoop requests. The rd_miss, dirty, and block_hit signals, which are inputs to the cache operation state machine, are latched only during the Pa state of the processor bus state machine of Fig. 8. Until a cachable CPU 48 memory read operation occurs that causes a cache read miss, the cache operation state machine stays in the OPi state. When said cache read miss occurs, cache operation state machine transitions either to the OPr state or the OPw state depending on whether it is necessary to "copy-back" to main memory 60 the segment of cache memory 42 in which the requested main memory location is to be written before writing the requested main memory location into cache memory 42. If the block containing the main memory location requested is in cache memory 42, the cache operation state machine will transition to the OPr state. In this instance, a sub-block in this block other than the sub-block containing the requested main memory 60 location is stored in cache memory 42. The cache operation state machine will also transition to the OPr state if the block containing the selected main memory 60 location is not in cache memory 42 provided that the block into which the selected main memory 60 location is to be written is not "dirty." If the block containing the main memory location requested is not in cache memory 42, the LRU RAM is used to determine which tag that is usable for that location is the least recently used. The dirty bit for that tag is then checked. If the dirty bit is false ($\overline{dirty}$ high), then the cache operation state machine transitions to the OPr state. Conversely, if the dirty bit is true (high), then the cache operation state machine transitions to the OPw state where "copy-back" occurs.

In the OPr state, a new sub-block containing the requested main memory 60 location is read into cache memory 42 from main memory 60 in such order that the last word read in will satisfy CPU's 48 read request. E_req is asserted true and remains true until enough extended local bus 58 reads have occurred to cause a sub-block counter in cache controller 44 to be satisfied. At that point, sb_last is set true (high) causing the cache operation state machine to transition to the OPi state.

In the OPw state, cache controller 44 performs memory writes of all of the valid sub-blocks within the LRU tag's block back t main memory 60. The valid bit of each sub-block is cleared as the last word of each sub-block is written back. When all of the valid bits of the LRU block have been cleared, blk_valid will be set false (low). When the sub-block has been written, sb_last will go true (high). At this point, the cache operation state machine transitions to the OPr state. During this transition, sb_last is reset to false (low).

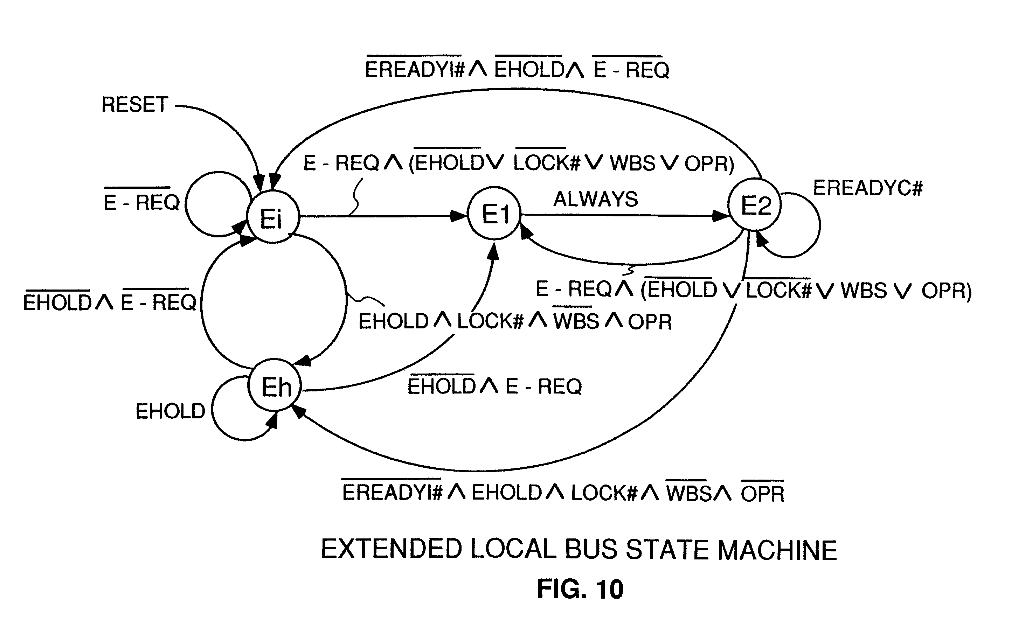

The extended local bus state machine of Fig. 10 depicts the state diagram for the portion of the control logic of cache controller 44 that controls the interlock between extended local bus 58 operations and CPU 48. Upon the RESET condition, the extended local bus state machine is forced to the Ei (idle) state. It remains in the Ei state until either the E_req signal is asserted true (high) or EHOLD is asserted true (high) and other conditions exist that allow cache controller 44 to release the extended local bus 48. If EHOLD is true (high) in either the Ei or E2 states, extended local bus state machine will transition to the Eh (hold) state only if CPU 48 LOCK# is false (LOCK# high), WBS is false ($\overline{WBS}$ high) indicating that the posted write buffer is empty, and the cache operation state machine of Fig. 9 is not in the OPr state (i.e., a new sub-block is not currently being fetched into cache memory 42 from main memory 60). If all of those conditions are not met, EHOLD is ignored until they are met and the extended local bus state machine is in either the Ei or E2 state. If the EHOLD conditions are not true in the Ei state, the extended local bus state machine remains in the Ei state either until they are true or E_req is true (high). If E_req is true and the EHOLD conditions are not, then the extended local bus state machine transitions to the E1 state. Note that the EHOLD conditions take precedence over E_req. When in the E1 state, the extended local bus state machine will always transition to the E2 state by the next cycle. When in the E2 state, the extended local bus state machine will remain in the E2 state until EREADYI# is true ($\overline{EREADYI\#}$ is high). When EREADYI# is true ($\overline{EREADYI\#}$ high) during the E2 state, the extended local bus state machine will transition to one of the following states: Ei, E1, or Eh. If the EHOLD conditions are true, the extended local bus state machine transitions to the Eh state regardless of other inputs. If the EHOLD conditions are not true, the extended local bus state machine transitions to the E1 state if E_req is true (high), or to the Ei state if E_req is not true ($\overline{E\_req}$ high). When the extended local bus state machine is in the Eh state, it will remain there as long as EHOLD is true (high), regardless of other conditions. When EHOLD goes false ($\overline{EHOLD}$ goes high) and E_req is also false ($\overline{E\_req}$ high), the extended local bus state machine transitions to the Ei state. If EHOLD goes false ($\overline{EHOLD}$ high) and E_req is true (high), the extended local bus state machine transitions to the E1 state.

The extended local bus state machine directly controls the EHLDA signal that is output to the extended local bus 58 to indicate to a remote bus master device that it now has control of the bus. The Eh state causes all extended local bus control signals other than EHLDA that are driven by cache controller 44 to be deasserted (placed into an undriven state), and the EHLDA signal to be asserted true (high). The E1 state cause the EADS# output to be asserted true (low) for the duration of the state, indicating to devices on the extended local bus 58 the start of an extended local bus 58 operation. The E2 state allows the EREADYI# signal to be used to form the pready# signal to be output to CPU 48, but only during certain operations that end in an external or system bus 56 operation where either data from the external bus 56 operation must be passed to CPU 48, or where CPU 48 must not be allowed to proceed until the external bus 56 operation has been completed.

The "snoop", "pready#", "Init__done", "rd__miss", "block__hit", "E__req", and "sb__last" signals are all internally generated signals of cache controller 44. The mneumonics of these signals correspond to the mneumonics used in the register transfer language listing which is Appendix A. The register transfer language listing contains a set of Boolean equations for the logic of cache controller 44 and specifies the interconnections between the logical blocks of cache controller 44 shown in Fig. 7.

Although the invention has been described in detail with reference to certain preferred embodiments and specific examples, variations and modifications exist within the scope and spirit of the invention as described and as defined in the following claims.

**Claims**

1. A system comprising a processor (48) having a processor address bus and a processor data bus, said processor being capable of performing locked write instruction sequences, a cache memory (42) having a plurality of locations for storing data, said cache memory (42) having a cache data bus coupled to said processor data bus, a system bus (56) including system address lines and system data lines, a main memory having a plurality of locations for storing data, said main memory (60) being coupled to said system address lines and system data lines, and a peripheral device coupled to said system address lines and system data lines, said system characterized by comprising:

control means (44) coupled to said processor address bus, processor data bus, cache memory (42), system address lines and system data lines for permitting said peripheral device to gain control over said system bus, said control means stopping operation of said processor before the onset of a locked write instruction if said peripheral has control of said system bus, and wherein when said processor commences a locked instruction sequence, said control means prevents said peripheral device from gaining control over said system bus.

2. System of claim 1, further characterized in that said microprocessor commences all locked instruction sequences with a locked read instruction, said microprocessor communicating a locked instruction signal to said control means (44) during execution of locked instructions, said processor (48) having a ready input line for receiving a ready signal, said ready signal indicating the presence of valid data on said processor data bus, wherein during the commencement of a lock read instruction by said processor while said peripheral device controls said system bus, said control means asserts said ready input line false to stop said processor until said peripheral device relinquishes control over said system bus.

3. System of claim 2, further characterized in that said peripheral device includes an EHOLD signal line coupled to said control means (44) for communicating a request signal to said control means, said control means including an EHLDA signal line coupled to said peripheral device for permitting said control means to communicate an EHLDA signal to said peripheral device when said processor is not performing locked instructions, the receipt of said EHLDA signal by said peripheral device enabling said peripheral device to control said system bus, wherein said control means will not cause said EHLDA signal to go true when said processor performs locked instructions.

## TABLE A

| Signal | Type | Description |
| --- | --- | --- |
| CLK2 | I | 80386 Clock Input. The C395e divides the CLK2 input by two. A 2-phase clock scheme is used inside the C395e. CLK2 is driven by the same source that drives the CLK2 input to the 80386 (see figure 5-1). |
| RESET | I | 80386 Reset Input. This input is used to clear all valid bits in the tag RAM, and to initialize other internal states of the C395e. The falling edge of RESET is also used to synchronize the CLK2 input for generating the internal 2-phase clock. This signal is driven by the same source that drives the RESET input to the 80386 (see figure 5-1). |
| A31-A2 | I | Processor Local Address Bus. Determines the word address being accessed by the 80386. Directly connected from the 80386. |
| BE3-0# | I | Processor Byte Enable. With A31-A2, these four inputs determines the byte location being accessed by the 80386. Directly connected from the 80386. |
| M/IO# | I | Processor Memory/IO Access. Determines type of bus cycle initiated by the processor, memory or I/O. Directly connected from the 80386. |
| D/C# | I | Processor Data/Control Access. Determines type of bus cycle initiated by the processor, data or control. Directly connected from the 80386. |
| W/R# | I | Processor Read/Write Access. Determines type of bus cycle initiated by the processor, read or write. Directly connected from the 80386. |
| LOCK# | I | Processor Bus Lock. Indicates to the C395e that the CPU needs exclusive access to the system bus. Directly connected from the 80386. |
| ADS# | I | Address Status from Processor. This input from the processor signals a new cycle and that cycle definition information is available. The C395e uses this input together with READYO# to determine the processor state. |
| PREADYI# | I | Processor Ready. This is an input to the C395e indicating the completion of a processor local bus cycle. A low on this input causes READYO# to go low. |
| READYO# | O | C395e Ready. The C395e drives this output on the processor local bus indicating completion of a C395e cycle. The C395e itself completes cycles such as cache read hits and in those cases directly drives the READYO# output. In cycles not directly completed by the C395e, such as read misses or non-cacheable accesses, the C395e forwards the EREADYI# signal from the extended local bus. |
| A20GATE | I | A20 Gate. This signal is used to gate the A20 address pin, for IBM PC AT compatibility. A low on this input forces A20 low before it is used for look-up in the tag RAM. A high level allows A20 to be used as-is. |

A-1

| Signal | Type | Description |
|--------|------|-------------|
| PHOLD | O | **Processor Local Bus Hold.** This output drives the HOLD input of the 80386 active to allow the C395e to gain control of the bus. |
| HLDA | I | **Processor Local Bus Hold Acknowledge.** This input, when active, acknowledges that the current bus master has relinquished the bus. If the C395e has asserted HOLD, it can now assume mastership of the processor local bus. |
| LBA# | I | **Local Bus Access.** This input identifies a CPU cycle as being directed to a resource other than the cache on the processor local bus. The C395e does not act upon these cycles in any manner. |
| NCA# | I | **Non-Cacheable Access.** This input identifies a processor local bus cycle as non-cacheable. It forwards the cycle to the extended local bus without affecting the cache directory or the external cache. This input gives the designer the full flexibility to define non-cacheable areas such as memory-mapped I/O. The externally decoded area address further decodes the NCA# input and disables cache operations for cycles pertaining to these areas. As another example, the user may also define a data only cache by decoding NCA# with the 80386 D/C# input. |
| MISS# | O | **Cache Miss.** This output indicates a miss on a cacheable CPU read/write cycle. This output goes active (low) when the C395e's internal tag comparators determine that a cacheable read/write is a miss. It is tri-stated when the C395e does not own the bus, which allows multiple C395e's to share the same node in multi-cache systems. |
| WBS | O | **Write Buffer Status.** This output indicates the full/empty status of the data buffer. It is high while a posted write is either pending or in progress. It goes active (low) when the cache controller latches the write data from the CPU into the data buffer/transceiver on the rising edge of LDSTB. It goes inactive (high) when the extended local bus completes the write operation (EREADY# input from chip set goes low). |
| FLUSH | I | **Cache Flush.** This input clears all the valid, dirty and LRU bits, thus initializing the cache. In write-thru mode, the C395e forwards memory requests to main memory until the flush is completed. In copy-back mode, the C395e also copies the dirty sub-blocks in valid blocks before executing the flush operation. This maintains coherency with main memory. The FLUSH input must be held active for at least one clock cycle to initiate the flush operation. In write-thru mode, the flush operation is completed in four clock cycles. In copy-back mode, the number of cycles depends on the number of words to be copied back to main memory |

A-2

| Signal | Type | Description |
|--------|------|-------------|
| CCS3-0# | O | **Cache Chip Select.** These C395e outputs enable the four bytes of the 32-bit wide cache. During a cache write hit, these outputs mirror EBE3#-0# to only select those bytes that are updated in main memory during a partial word write. In a read hit or miss operation, all four signals are active. In a read miss, this ensures that the entire word is updated. In a read hit, the CPU ignores bytes it did not access. |
| COED-A# | O | **Cache Output Enables.** These C395e outputs tie to the output enable inputs of the cache RAMs to individually enable the selected cache bank to drive the data bus. In 4-way set-associative mode, they operate individually. In direct-mapped mode, they operate identically, and in two-way set-associative mode, they operate in pairs (CWED-C and CWEB-A), allowing the system designer to use either/any of the identical lines. |
| CWED-A# | O | **Cache RAM Write Enables.** These C395e outputs tie to the write enable inputs of the cache RAMs in order to individually enable the selected cache bank to receive data from the CPU. In 4-way set-associative mode, they operate individually. In direct-mapped mode, they operate identically, and in two-way set-associative mode, they operate in pairs (CWED-C and CWEB-A), allowing the system designer to use either/any of the identical lines. |
| CA15-0 | O | **Cache RAM Address.** These outputs drive the address pins on the cache RAMs. |
| CT/R# | O | **Cache Data Transmit/Receive.** This pins controls the direction of the data buffer (if needed) on the cache data lines. |
| EBE3-0# | O | **Extended Local Bus Byte Enables.** These outputs enable individual bytes on the data transceiver. |
| EM/IO# | O | **Extended Local Bus Memory/IO Status.** This output determines the type of bus cycle initiated by the C395e on the extended local bus, memory or I/O. |
| ED/C# | O | **Extended Local Bus Data/Control Status.** This output determines the type of bus cycle initiated by the C395e on the extended local bus, data or control. |
| EW/R# | O | **Extended Local Bus Write/Read Status.** This output determines the type of bus cycle initiated by the C395e on the extended local bus, read or write. |
| EADS# | O | **Extended Local Bus Address Status.** This output signals a new cycle on the extended local bus, and indicates that the cycle definition information is available. |
| EREADYI# | I | **Extended Local Bus READY Indication.** This input signals the termination of a memory/IO cycle on the extended local bus. |

A-3

| Signal | Type | Description |
|---|---|---|
| ERDYEN# | O | Extended Local Bus READY Enable. This signal gates the EREADY# signal on to the processor local bus. It is used to extend system DMA cycles. |
| MEMDIS | O | Memory Disable. This pin goes true upon a bus snoop read hit and is used to disable main memory, so that the cache RAM can supply the data. |
| ET/R# | O | Extended Local Bus Data Transmit/Receive. This input defines the direction of the extended local bus data transceiver. |
| EDOE# | O | Data Output Enable. This output enables data output on the extended local bus transceiver. |
| LDSTB | O | Data load strobe. This output latches the extended local bus data on the rising edge. |
| EHOLD | I | Extended Local Bus Hold Request. This input signals a request for the extended local bus from another master currently in slave mode. This signal is equivalent to the HOLD which would be presented to the CPU in the absence of the cache controller. |
| EHLDA | O | Extended Local Bus Hold Acknowledge. The C395e acknowledges a request for extended local bus control via this output. This signal is equivalent to the HLDA output of the CPU which would acknowledge a bus request to the system bus in the absence of the cache controller. |
| SA31-0 | I/O | Snoop Address Inputs. These inputs snoop system bus addresses during the time that another master controls the system bus in order to maintain cache coherency. They also drive the address lines to the system chip set during pass-thru, write-thru and sub-block read/write operations. |
| MEMR# | I | Main Memory Read Cycle. This input from the extended local bus snoops the system bus for main memory read cycles. |
| MEMW# | I | Main Memory Write Cycle. This input from the extended local bus snoops the system bus for main memory write cycles. |
| MCS16# | I | Bus Size 16. An active low on this input indicates a 16-bit main memory cycle. This input is used during bus snoop operations to form the proper word alignment and chip select signals on the cache RAMs. |
| MCS32# | I | Bus Size 32. An active low on this input indicates a 16-bit main memory cycle. This input is used during bus snoop operations to form the proper word alignment and chip select signals on the cache RAMs. |
| 4WAY | I | 4-way Set-associative Mode. A high input selects 4-way set-associative mode. A low input enables the 2W/D# pin to control the set-associativity between direct and 2-way set-associative. |

A-4

17

EP 0 428 149 A2

| Signal | Type | Description |
|--------|------|-------------|
| 2W/D# | I | **2-way Set-associative/Direct Mode.** A high input selects 2-way set-associative operation. A low selects direct mapping. |
| M0-1 | I | **Cache Memory Size Select.** These two inputs select one among four cache size options: |

|  |  |  | M1 | M0 | Cache size |
|--|--|--|----|----|------------|
|  |  |  | 0 | 0 | 32kB |
|  |  |  | 0 | 1 | 64kB |
|  |  |  | 1 | 0 | 128kB |
|  |  |  | 1 | 1 | 256kB |

| Signal | Type | Description |
|--------|------|-------------|
| SEL32 | I | **CPU Interface Mode Select.** This input, in conjunction with BE3#, (see section 4.1) selects among the following modes: |

|  |  |  | SEL32 | BE3# | CPU Interface |
|--|--|--|-------|------|---------------|
|  |  |  | 0 | 0 | 80286 CPU/80286 chip set |
|  |  |  | 0 | 1 | 80386SX CPU/80386SX chip set |
|  |  |  | 1 | x | 80386 CPU/80386 chip set |

| Signal | Type | Description |
|--------|------|-------------|
| WTM | I | **Write-thru Mode.** If WTO is low, this pin is sampled during ADS# low on each operation. If valid, the C395e operates in the write-thru mode. Otherwise, it operates in copy-back mode. It can be used to selectively disable copyback for regions of memory or memory-mapped I/O. If WTO is high, WTM must be low. |
| WTO | I | **Write-thru Only Mode.** This pin is sampled during RESET. If valid, the C395e operates in write-thru only mode. |
| VDD | I | Power (+5V). |
| VSS | I | Ground (0V). |

A-5

18

## TABLE B

| System-to-Cache Map-ping | Cache Configuration | | | | | | System Memory Configuration | | |
|---|---|---|---|---|---|---|---|---|---|
| | Size (kB) | Sub-Block Size (B) | Block Size (B) | No.of Blocks/ Bank | Bank Size (kB) | No. of Banks (B) | Block Size (kB) | Page Size | No. of Pages |
| Direct | 32 | 4 | 32 | 1k | 32 | 1 | 32 | 32 | $2^{17}$ |
| | 64 | 8 | 64 | 1k | 64 | 1 | 64 | 64 | $2^{17}$ |
| | 128 | 16 | 128 | 1k | 128 | 1 | 128 | 128 | $2^{17}$ |
| | 256 | 32 | 256 | 1k | 256 | 1 | 256 | 256 | $2^{17}$ |
| 2-way set-assoc-iative | 32 | 4 | 32 | 512 | 16 | 2 | 32 | 16 | $2^{18}$ |
| | 64 | 8 | 64 | 512 | 32 | 2 | 64 | 32 | $2^{18}$ |
| | 128 | 16 | 128 | 512 | 64 | 2 | 128 | 64 | $2^{18}$ |
| | 256 | 32 | 256 | 512 | 128 | 2 | 256 | 128 | $2^{18}$ |
| 4-way set-assoc-iative | 32 | 4 | 32 | 256 | 8 | 4 | 32 | 8 | $2^{19}$ |
| | 64 | 8 | 64 | 256 | 6 | 4 | 64 | 16 | $2^{19}$ |
| | 128 | 16 | 128 | 256 | 32 | 4 | 128 | 32 | $2^{19}$ |
| | 256 | 32 | 256 | 256 | 64 | 4 | 256 | 64 | $2^{19}$ |

FIG. 1

BLOCK 0

SUB-BLOCK POINTER

BLOCK 1

BLOCK POINTER

BLOCK 1023

16    0    7    0

17- BIT TAG

BLOCK DIRTY BIT

EIGHT VALID SUB-BLOCK BITS

CACHE CONTROLLER TAG MEMORY

7
6
5
4
3
2 SUB-BLOCK
1
0
7

0

7

0

BLOCK

CACHE MEMORY BANK (32KB)

PAGE $2^{17}$ - 1

PAGE 1

PAGE 0

32KB PAGE

4 GIGABYTES OF TOTAL SYSTEM MEMORY

SYSTEM MEMORY

EP 0 428 149 A2

FIG. 2

16KB PAGE

PAGE 1
PAGE 0

4 GIGABYTES OF TOTAL SYSTEM MEMORY

SYSTEM MEMORY

BLOCK

BLOCK

BANK 'B'
BANK 'A'

7
6
5
4
3
2 SUB-BLOCK
1
0
7

0

7

2 CACHE MEMORY BANKS (16KB/BANK)

DIRECTORY 'B'

DIRECTORY 'A'

SUB-BLOCK POINTER

BLOCK POINTER

• • •

EIGHT VALID SUB-BLOCK BITS

BLOCK DIRTY BIT

18 - BIT TAG

0

7

0

17

BLOCK 0

BLOCK 1

BLOCK 511

CACHE CONTROLLER TAG MEMORY

FIG. 3

EP 0 428 149 A2

FIG. 4
PRIOR ART

EP 0 428 149 A2

FIG. 5

PROCESSOR LOCAL BUS
SIGNALS

CACHE CONTROL,
EXTENDED LOCAL BUS &
CONFIGURATION SIGNALS

**CACHE
CONTROLLER**

44

PROCESSOR
32-BIT ADDRESS
- CLK2
- RESET
- A31-A2
- BE3-0#

PROCESSOR
CYCLE DEFINITION
- M/10#
- D/C#
- W/R#
- LOCK#

READY INDICATION
- ADS#
- READY0#
- PREADY#

LOCAL BUS DECODE
- LBA#
- NCA#

STATUS & CONTROL
- MISS#
- WBS
- FLUSH

CACHE CONTROL
- CA15-0
- CCS3-0#
- COED-A#
- CWED-A#
- CT/R#

E-BUS (SYSTEM) INTERFACE
- EBE3-0#
- EM/IO#
- ED/C#
- EW/R#
- EADS#
- EREADYI#
- ERDYEN#
- MEMDIS

TRANSCEIVER CONTROL
- ETIR#
- EDOE#
- LDSTB

BUS ARBITRATION
- EHOLD
- EHLDA

COHERENCY SUPPORT
- SA31-SA0
- MEMR#
- MEMW#

CONFIGURATION INPUTS
- 4-WAY
- 2W/D#
- M1-M0
- SEI32
- STW,WTM

**FIG. 6**

KEY TO
FIGURE 7

| 7A |
| 7B |

FIG. 7A

ADDRESS MULTIPLEX LOGIC — 100

A32-A2
SA31-SA2
CA15-CA0
SA1-SA0

VALID BIT DECODE — 118

TAG READ/ WRITE CONTROL — 134

TAGRAM0 — 102
TAGRAM1 — 104
TAGRAM2 — 106
TAGRAM3 — 108

TAG COMP0 — 110
TAG COMP1 — 112
TAG COMP2 — 114
TAG COMP3 — 116

OUTPUT CONTROL LOGIC — 122

C0ED-A#
CWD-A#

BIT STATUS

EP 0 428 149 A2

**FIG. 7B**

PROCESSOR BUS STATE MACHINE

**FIG. 8**

EP 0 428 149 A2

CACHE OPERATION STATE MACHINE

FIG. 9

EP 0 428 149 A2

EXTENDED LOCAL BUS STATE MACHINE

FIG. 10